# EUROPÄISCHE PATENTSCHRIFT

(11) **EP 3 803 275 B1**
(45) Veröffentlichungstag und Bekanntmachung des Hinweises auf die Patenterteilung: **19.08.2026**
(21) Anmeldenummer: 19725297.6
(22) Anmeldetag: 09.05.2019
(51) Int. Cl.: G01C 21/36, G06F 3/02, G02B 27/01

(54) **VERFAHREN ZUR BERECHNUNG EINER "AUGMENTED REALITY"-EINBLENDUNG FÜR DIE DARSTELLUNG EINER NAVIGATIONSROUTE AUF EINER AR-ANZEIGEEINHEIT, VORRICHTUNG ZUR DURCHFÜHRUNG DES VERFAHRENS SOWIE KRAFTFAHRZEUG UND COMPUTERPROGRAMM**
METHOD FOR CALCULATING AN "AUGMENTED REALITY" OVERLAY FOR DISPLAYING A NAVIGATION ROUTE ON AN AR DISPLAY UNIT, DEVICE FOR CARRYING OUT THE METHOD, MOTOR VEHICLE AND COMPUTER PROGRAM
PROCÉDÉ DE CALCUL D'UNE INCRUSTATION À RÉALITÉ AUGMENTÉE POUR LA REPRÉSENTATION D'UN ITINÉRAIRE DE NAVIGATION SUR UNE UNITÉ D'AFFICHAGE À RÉALITÉ AUGMENTÉE, DISPOSITIF SERVANT À METTRE EN OEUVRE LE PROCÉDÉ, AINSI QUE VÉHICULE À MOTEUR ET PROGRAMME INFORMATIQUE

(30) Priorität: 01.06.2018 DE 102018208703
(43) Veröffentlichungstag der Anmeldung: 14.04.2021
(73) Patentinhaber: VOLKSWAGEN AKTIENGESELLSCHAFT, 38440 Wolfsburg (DE)
(72) Erfinder: KASSNER, Astrid, 10117 Berlin (DE); HENNING, Matthias, 10713 Berlin (DE); SCHMIDT, Norwin, 25980 Westerland (DE)
(86) Internationale Anmeldenummer: PCT/EP2019/061982
(87) Internationale Veröffentlichungsnummer: WO 2019/228779

(56) Entgegenhaltungen:
- EP-B1- 2 616 775
- US-A1- 2004 236 507
- US-A1- 2010 292 886
- US-A1- 2017 314 945

## Beschreibung

Der Vorschlag betrifft das technische Gebiet von Fahrerinformationssystemen, die auch unter dem Begriff Infotainmentsystem bekannt sind. Solche Systeme werden vor allem in Fahrzeugen eingesetzt. Es besteht aber auch die Möglichkeit des Einsatzes der Erfindung bei Fußgängern, Radfahrern etc. mit Datenbrille. Der Vorschlag betrifft weiterhin eine entsprechend ausgelegte Vorrichtung zur Durchführung des Verfahrens sowie ein Kraftfahrzeug und ein Computerprogramm.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR). Weniger geläufig ist der entsprechende deutschsprachige Begriff der "erweiterten Realität". Dabei wird die reale Umgebung mit virtuellen Elementen angereichert. Das hat mehrere Vorteile: Der Blick nach unten auf andere Displays als der Windschutzscheibe entfällt, da viele relevante Informationen auf der Windschutzscheibe abgebildet werden. So muss der Fahrer seinen Blick nicht von der Fahrbahn abwenden. Das Besondere an den AR-Darstellungen ist, dass eine positionsgenaue Verortung der virtuellen Elemente in der realen Umwelt möglich ist. An dem Ort, wo der Fahrer den Blick in der realen Umwelt hinwendet, wird auch das virtuelle Element eingeblendet. Mit diesen Einblendungen kann die Real-Umwelt aus Sicht des Nutzers "überlagert" und mit zusätzlichen Informationen versehen werden, z.B. kann ein Navigationspfad eingeblendet werden. Dadurch ist ein geringerer kognitiver Aufwand seitens des Fahrers erreicht, da keine Interpretation einer abstrahierenden Grafik erfolgen muss, sondern ein intuitives Verständnis im Sinne der normalen Wahrnehmungsgewohnheiten stattfinden kann.

Zurzeit werden Head-Up Displays (HUD) als AR-Anzeigeeinheiten in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug. Dies hat den Vorteil, dass die eingeblendeten Informationen so präsentiert werden, dass die Augen des Fahrer selbst von Akkommodationstätigkeit entlastet werden.

Das "Bild" setzt sich dabei folgendermaßen zusammen: Es handelt sich weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass davon ein Ausschnitt gesehen werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Zur Zeit wird ebenfalls intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display ist es möglich, den Fahrer besser über das Geschehen im Umfeld seines Fahrzeuges zu informieren.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können. Dabei kann die im Folgenden noch näher beschriebene Lösung sowohl für manuell gesteuerte als auch für automatisch gesteuerte Fahrzeuge eingesetzt werden.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Die meisten Fahrzeuge weisen heute ein Navigationssystem auf, um eine Ziel- und Straßenführung für einen Fahrer vorzusehen. Weiterhin werden Fahrzeuge mit einem darin montierten HUD auf dem Markt angeboten, wobei das HUD gewünschte Informationen auf die Windschutzscheibe eines Fahrzeugs projiziert und dem Fahrer ermöglicht, die projizierten Informationen zu betrachten, während der Fahrer nach vorne blickt.

In der DE 10 2009 047 410 A1 ist ein Verfahren zum dynamischen Ermitteln eines Routenverlaufs durch ein Navigationssystem vorgeschlagen. Dabei werden mehrere alternative Routen berechnet. Bis zu einem Verzweigungspunkt haben die Routen einen identischen Verlauf und werden als gemeinsame Route angezeigt. Ab dem Verzweigungspunkt fallen die Routenverläufe auseinander. Das Navigationssystem erkennt, welche Route gewählt wurde, durch das entsprechende Fahrmanöver. Biegt das Fahrzeug ab, ist die entsprechende Route gewählt.

Aus der US 2017/314945 A1 ist ein weiteres Verfahren zum Generieren von Fahrrouten bekannt, bei dem zunächst eine Hauptroute von einem Ursprung zu einem Ziel generiert wird. Während der Fahrt werden Entscheidungspunkte entlang der bereisten Hauptroute Identifiziert und alternative Routen zwischen dem jeweiligen Entscheidungspunkt und dem Ziel generiert, die als neue Hauptroute vom Entscheidungspunkt zum Ziel verwendet werden können.

Aus der DE 10 2013 016 241 A1 ist ein Verfahren zur augmentierten Darstellung mindestens einer Zusatzinformation in mindestens einem aufgenommenen digitalen Bild einer Umgebung, insbesondere einer Fahrzeugumgebung, bekannt, wobei das aufgenommene Bild als Ausgabebild einen Hintergrund bildend auf einer Anzeige ausgegeben wird und die Zusatzinformation in Abhängigkeit von dem zugehörigen Hintergrundbereich des Ausgabebildes verändert im Ausgabebild überlagert ausgegeben wird.

Aus der DE 10 2017 211 821 A1 ist ein Verfahren zur Verringerung einer Fahrerablenkung bekannt. Das Verfahren kann ein Projizieren eines oder mehrerer grafischer Elemente auf eine Windschutzscheibe im Blickfeld eines Fahrers des Fahrzeugs durch ein HUD umfassen. Das Verfahren kann auch ein Bestimmen eines Inhaltsstatus des einen oder der mehreren projizierten grafischen Elemente umfassen. Das Verfahren kann ferner ein Erfassen eines oder mehrerer Objekte in einer Umgebung des Fahrzeugs umfassen. Das Verfahren kann ferner ein Benachrichtigen des Fahrers über ein oder mehrere erfasste Objekte, wenn der Inhaltsstatus ein Ablenkungskriterium erfüllt, umfassen. Das Verfahren wird auch bei der Fahrzeugnavigation eingesetzt.

Relativ naheliegende Beispiele beziehen sich meist auf den Bereich der Navigation. Während klassische Navigationsanzeigen (mit herkömmlichen LCD-Displays) in der Regel schematische Darstellungen anzeigen (z.B. einen rechtwinklig verlaufenden Pfeil nach rechts als Zeichen dafür, dass bei nächster Gelegenheit rechts abgebogen werden soll), bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Dennoch weisen die bisher bekannten Ansätze auch verschiedene Probleme auf, für die zum jetzigen Zeitpunkt keine Lösungen bekannt sind. Dies wurde im Rahmen der Erfindung erkannt.

Die Navigationsfunktion innerhalb eines Fahrzeugs wird in Zukunft vermehrt durch Darstellungen auf einem Head-Up Display (augmentiert oder mit 2D-Manöver-Anzeigen) gestützt. Um den Nutzer mit einer konstanten Straßen- & Routenführung zu unterstützen, augmentiert das System einen Navigationspfad direkt auf die Straße.

Sind Änderungen der Route aufgrund von Verkehrsstörungen, Staus, Umleitungen o.ä. notwendig, so berechnen heutige Navigationsgeräte eine neue Navigationsroute und informieren den Nutzer über die Neuberechnung. Aus der US 2010/0292886 A1 ist es bekannt, wie eine AR-Projektierung mittels Head-Up Display Informationen zu einem Fahrverlauf einer Fahrbahn erzeugt, wobei Hinweise zu Fahrbahnen, Richtungsweisungen, Fahrtstrecken wie auch Warnungen angezeigt werden. Bislang erfolgt aber keine Information oder Visualisierung darüber, was sich an der Route verändert hat. Für den Nutzer ist daher der neue Reiseverlauf nicht ersichtlich und er wird erst bei Sprachanweisungen des Navigationsgerätes über das unmittelbar bevorstehende Fahrmanöver involviert. Dieses Problem wurde im Rahmen der Erfindung erkannt.

Es besteht also der Bedarf für weitere Verbesserungen bei der Routenführung eines Fahrzeuges und der diesbezüglichen Rückmeldung zum Fahrer über das Infotainment-System.

Die Erfindung setzt sich zur Aufgabe, den Fahrer besser bei Routenänderungen zu unterstützen.

Diese Aufgabe wird durch ein Verfahren zur Berechnung einer "augmented reality"-Einblendung für die Darstellung einer Navigationsroute auf einer AR-Anzeigeeinheit gemäß Anspruch 1, eine Vorrichtung zur Durchführung des Verfahrens gemäß Anspruch 7 sowie ein Kraftfahrzeug gemäß Anspruch 10 und ein Computerprogramm gemäß Anspruch 11 gelöst. Dabei dient die Einblendung dem Zweck der Unterstützung des Fahrers bei der Längsführung des Fahrzeuges.

Die abhängigen Ansprüche beinhalten vorteilhafte Weiterbildungen und Verbesserungen der Erfindung entsprechend der nachfolgenden Beschreibung dieser Maßnahmen.

Das Verfahren zur Berechnung einer AR-Einblendung einer von einem Navigationssystem berechneten Route, welche einem Fahrer eines Fahrzeugs auf einer AR-Anzeigeeinheit, insbesondere einem Head-Up Display eines Fahrzeuges, dargestellt wird, besteht darin, dass die Route von Zeit zu Zeit neu berechnet wird. Dabei wird ein Navigationspfeil dargestellt, wenn sich das Fahrzeug auf einer eingestellten Route befindet, aber kein unmittelbares Fahrmanöver bevorsteht. In einer ersten Distanz vor einer Abzweigstelle wird ein Hinweis auf eine neu berechnete Route eingeblendet, wobei dem Fahrer eine Bedienmöglichkeit gegeben wird, eine Übersicht zu der neu berechneten Route einzublenden, und bei Ausübung dieser Bedienmöglichkeit die Übersicht zu der neu berechneten Route dargestellt wird, und wobei dem Fahrer eine weitere Bedienmöglichkeit gegeben wird, zwischen der Übersicht der neu berechneten Route und einer Übersicht einer zuvor berechneten Route hin und her zu schalten, und bei Ausübung dieser weiteren Bedienmöglichkeit entweder die Übersicht zu der neu berechneten Route oder die Übersicht zu der zuvor berechneten Route dargestellt wird, und wobei die jeweilige Route in ihrem Verlauf bis zum Zielpunkt angezeigt wird.

In einer gegenüber der ersten Distanz geringeren zweiten Distanz vor der Abzweigstelle wird ein auf die Straße augmentierter Navigationspfad für die neu berechnete Route neben einem auf die Straße augmentierten Navigationspfad der zuvor berechneten Route dargestellt und der Navigationspfad für diejenige Route, der das Fahrzeug nicht folgt, ausgeblendet, sobald das Navigationssystem am Setzen des Blinkers des Fahrzeuges erkannt hat, welcher Route das Fahrzeug folgt.

Um die Route von Zeit zu Zeit zu neu zu berechnen, kann das System auch bestimmte Kriterien berücksichtigen und dann selbst entscheiden, ob die Route neu berechnet wird. Werden beispielsweise Zeitverzögerungen auf der aktuellen Strecke festgestellt oder Zeitverbesserungen auf Alternativrouten festgestellt, kann die Route neu berechnet werden. Dieses Verfahren hat den Vorteil, dass das System eine alternative Route empfiehlt und diese im unmittelbaren Sichtfeld des Nutzers anzeigt. Der Fahrer erfährt keine große Ablenkung und gewinnt aber die Möglichkeit, die neue Route schnell beurteilen zu können. Durch die Bedienmöglichkeit hat der Fahrer die Möglichkeit, beide Routen miteinander zu vergleichen.

Der Nutzer bekommt eine Übersicht der ursprünglich berechneten Route in Kombination mit der neuen Routenempfehlung angezeigt und kann sich auf Basis der verschiedenen Streckenverläufe für eine der beiden Optionen (vorrangig für die neue Empfehlung) entscheiden. Wenn auch noch die Information hinsichtlich der voraussichtlichen Fahrtzeit für die jeweilige Route angezeigt wird (Minuten bis zum Ziel), kann er bei Wahl der Route mit der geringeren Fahrtzeit damit Zeit sparen.

Vor Einblendung der neu berechneten Route wird eine AR-Einblendung so berechnet, dass dem Fahrer ein Hinweis auf die neu berechnete Route gegeben wird, Eine vorteilhafte Maßnahme besteht in einem Bedienhinweis, wie sich der Fahrer die neu berechnete Route einblenden lassen kann.

Für die Gewinnung einer Übersicht über die Route wird die AR-Einblendung für die Darstellung der neu berechneten Route und der zuvor berechneten Route so berechnet, dass die jeweilige Route in ihrem Verlauf bis zum Zielpunkt angezeigt wird.

Eine weitere vorteilhafte Maßnahme besteht darin, die AR-Einblendung für die Routenübersicht zoombar zu berechnen, wobei ein Zoomvorgang mit einer Lenkradbedienung ausführbar ist. Dies ist vorteilhaft für den Fahrer, wenn er einen genaueren Blick auf die Streckenverläufe werfen möchte.

Darüber hinaus ist es vorteilhaft für das Verfahren, wenn vor Einblendung der Routenübersicht eine Bewertung der Fahrsituation durchgeführt wird, und die Einblendung nur dann durchgeführt wird, wenn die Bewertung der Fahrsituation ergibt, dass die Fahrsituation keine erhöhte Aufmerksamkeit von dem Fahrer erfordert. So wird das Ablenkungspotenzial für den Fahrer gering gehalten.

Weiterhin von Vorteil ist, wenn die AR-Einblendung für die Darstellung der neu berechneten Route so berechnet wird, dass sie sich farblich von der AR-Einblendung für die Darstellung der zuvor berechneten Route unterscheidet. Dies erhöht noch einmal die bessere Unterscheidbarkeit der Routen.

Dabei ist es vorteilhaft, wenn die Route mit dem größeren Zeitbedarf mit einer roten oder orangenen Farbe dargestellt wird, hingegen die zeitlich attraktivere Route mit einer blauen oder grünen Farbe dargestellt wird. Dies entspricht der üblichen Darstellungsweise, wenn ausgedrückt werden soll, dass die eine Option vorteilhaft gegenüber der anderen Option ist.

Sobald der Fahrer sich für eine der beiden Routen entschieden hat, wird diejenige Route, der das Fahrzeug nicht folgt, ausgeblendet. Dabei kann das Navigationssystem am "Positionstracking" erkennen, welcher Route das Fahrzeug folgt. Das Positionstracking ist auch unter dem Begriff GPS-Tracking bekannt. Dabei wertet das Navigationssystem die aktuelle Position des Fahrzeuges aus. Nach der Abzweigstelle kann sich das Fahrzeug nur auf einer der beiden Routen befinden. Dann kann die andere Route ausgeblendet werden.

Eine Vorrichtung zur Durchführung des Verfahrens gemäß der Erfindung weist eine AR-Anzeigeeinheit, eine Recheneinheit und ein Navigationssystem auf. Von dem Navigationssystem wird eine Route berechnet, wobei das Navigationssystem so ausgelegt ist, dass es die Navigationsroute von Zeit zu Zeit neu berechnet, um sich an wechselnde Bedingungen, insbesondere die Verkehrsverhältnisse, anzupassen. Die Recheneinheit führt die Schritte zur Berechnung einer AR-Einblendung einer von dem Navigationssystem berechneten Route auf der AR-Anzeigeeinheit durch. Dabei ist die Recheneinheit so ausgelegt, dass sie die AR-Einblendung so berechnet, dass ein Navigationspfeil dargestellt wird, wenn sich das Fahrzeug auf einer eingestellten Route befindet, aber kein unmittelbares Fahrmanöver bevorsteht; in einer ersten Distanz vor einer Abzweigstelle ein Hinweis auf eine neu berechnete Route eingeblendet wird, wobei der Hinweis auf die neu berechnete Route eine Bedienmöglichkeit beinhaltet, eine Übersicht zu der neu berechneten Route einzublenden, und bei Ausübung dieser Bedienmöglichkeit die Übersicht zu der neu berechneten Route dargestellt wird, und wobei eine weitere Bedienmöglichkeit ermöglicht, zwischen der Anzeige der Routenübersicht für die neu berechnete Route und der zuvor berechneten Route hin und her zu schalten, und bei Ausübung dieser weiteren Bedienmöglichkeit entweder die Übersicht zu der neu berechneten Route oder die Übersicht zu der zuvor berechneten Route dargestellt wird, und wobei die jeweilige Route in ihrem Verlauf bis zum Zielpunkt angezeigt wird; und in einer gegenüber der ersten Distanz geringeren zweiten Distanz vor der Abzweigstelle ein auf die Straße augmentierter Navigationspfad für die neu berechnete Route neben einem auf die Straße augmentierten Navigationspfad der zuvor berechneten Route dargestellt wird und der Navigationspfad für diejenige Route, der das Fahrzeug nicht folgt, ausgeblendet wird, sobald das Navigationssystem am Setzen des Blinkers des Fahrzeuges erkannt hat, welcher Route das Fahrzeug folgt.

Die Vorrichtung wird so ausgelegt, dass mit der entsprechend programmierten Recheneinheit die Berechnungen von AR-Einblendungen durchgeführt werden, die in den entsprechenden Verfahrensschritten des erfindungsgemäßen Verfahrens aufgeführt sind.

Die AR-Anzeigeeinheit kann in vorteilhafter Weise als Head-Up Display ausgeführt werden.

Im Übrigen gelten für die Vorrichtung zur Durchführung des Verfahrens mit der entsprechend programmierten Recheneinheit die gleichen Vorteile wie bei den Ansprüchen mit den entsprechenden Verfahrensschritten erwähnt.

Die erfindungsgemäße Vorrichtung kann in einem Kraftfahrzeug eingesetzt werden. Im Fahrzeug wird die Erfindung vorzugsweise so realisiert, dass die Anzeigeeinheit im Fahrzeug fest installiert ist, z.B. in Form eines Head-Up Displays.

Für ein Computerprogramm, das in der Recheneinheit der Vorrichtung zur Abarbeitung kommt, um das erfindungsgemäße Verfahren durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:
- Fig. 1: das Prinzip der Einblendung von Informationen in das Sichtfeld des Fahrers eines Fahrzeuges während der Fahrt mit Hilfe eines Head-Up Displays;
- Fig. 2: das typische Cockpit eines Fahrzeuges;
- Fig. 3: ein Blockschaltbild des Infotainment-Systems des Fahrzeuges;
- Fig. 4: eine Darstellung einer AR-Einblendung für den Fahrer mit einem Hinweis, dass die Route neu berechnet wurde;
- Fig. 5: eine Darstellung einer AR-Einblendung für den Fahrer mit einer Visualisierung einer Routenübersicht über die neu berechnet Route mit Auswahlmöglichkeit zum Wechseln auf die Anzeige der zuvor berechneten Route;
- Fig. 6: eine Darstellung einer AR-Einblendung für den Fahrer mit einer Visualisierung einer Routenübersicht über die ursprüngliche Route mit Auswahlmöglichkeit zum Wechseln auf die Anzeige der neu berechneten Route;
- Fig. 7: eine Darstellung einer AR-Einblendung für den Fahrer mit einer reduzierten Navigationsdarstellung für den Fall, dass keine besonderen Fahrmanöver bevorstehen;
- Fig. 8: eine Darstellung einer AR-Einblendung für den Fahrer mit einer Darstellung des aktuellen Navigationspfades für den Fall, dass ein Fahrmanöver bevorsteht;
- Fig. 9: eine Darstellung einer AR-Einblendung für den Fahrer mit einer Darstellung des aktuellen und eines neu berechneten Navigationspfades für den Fall, dass ein Abbiege-Fahrmanöver bevorsteht;
- Fig. 10: eine Darstellung einer AR-Einblendung für den Fahrer mit einer Darstellung der von dem Fahrer gewählten neu berechneten Navigationsroute; und
- Fig. 11: ein Flussdiagramm für ein Programm zur Berechnung von AR-Einblendungen für die Anzeige der verschiedenen Navigationsrouten.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

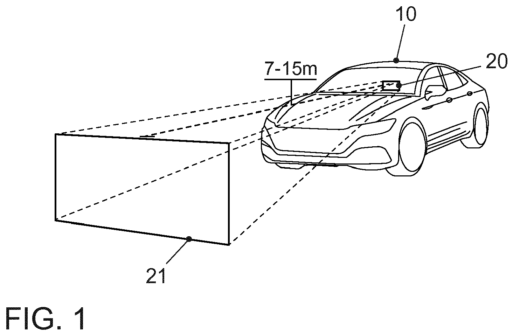

Fig. 1 veranschaulicht die prinzipielle Funktionsweise eines Head-Up Displays. Das Head-Up Display 20 ist im Fahrzeug 10 unterhalb/hinter dem Kombiinstrument im Armaturenbrettbereich angebracht. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

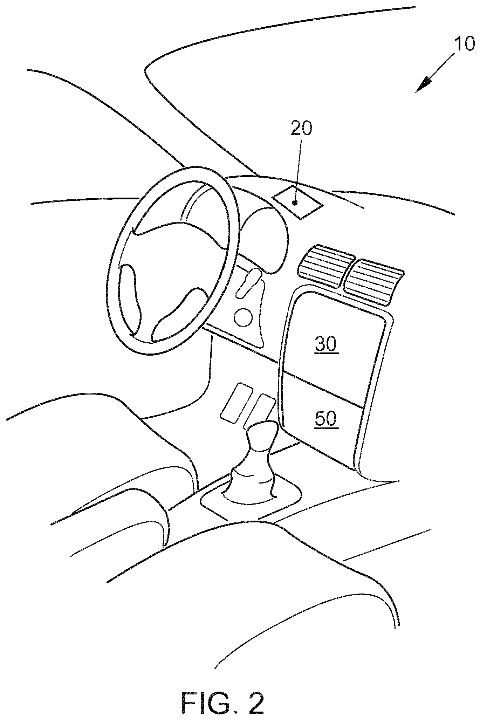

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind zwei Anzeigeeinheiten eines Infotainment-Systems mit Bezugszeichen hervorgehoben. Es handelt sich um das Head-Up-Display 20 und einen berührungsempfindlichen Bildschirm 30, der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

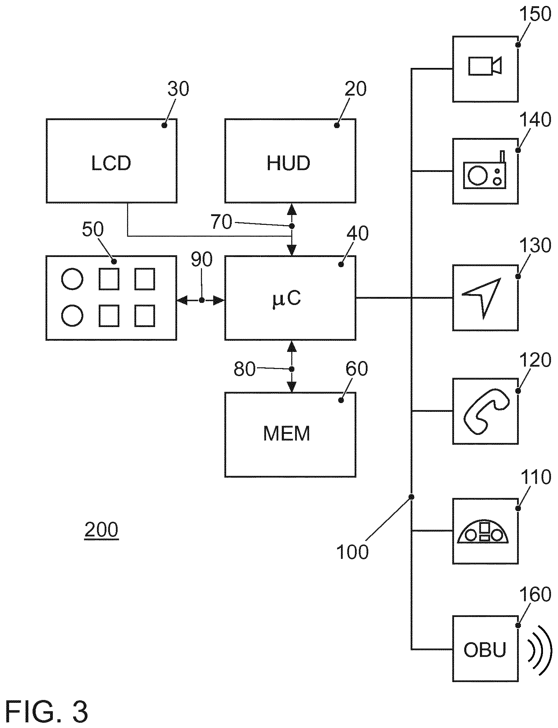

Fig. 3 zeigt schematisch ein Blockschaltbild des Infotainment-Systems 200 sowie beispielhaft einige Teilsysteme oder Applikationen des Infotainment-Systems. Die Bedienungs-Vorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen. Hier können auch die Punkte/Symbole abgelegt sein, die für die Berechnung der Raster-Einblendung als Grundlage dienen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Das erfindungsgemäße Verfahren zur Berechnung einer AR-Einblendung von Zusatzinformationen für eine Anzeige auf einer AR-Anzeigeeinheit 20 wird im Folgenden anhand von zwei Ausführungsbeispielen erläutert.

Für die weiteren Figuren gilt, dass gleiche Bezugszahlen die gleichen Felder und Symbole bezeichnen wie bei der Beschreibung der Figuren 1 bis 3 erläutert.

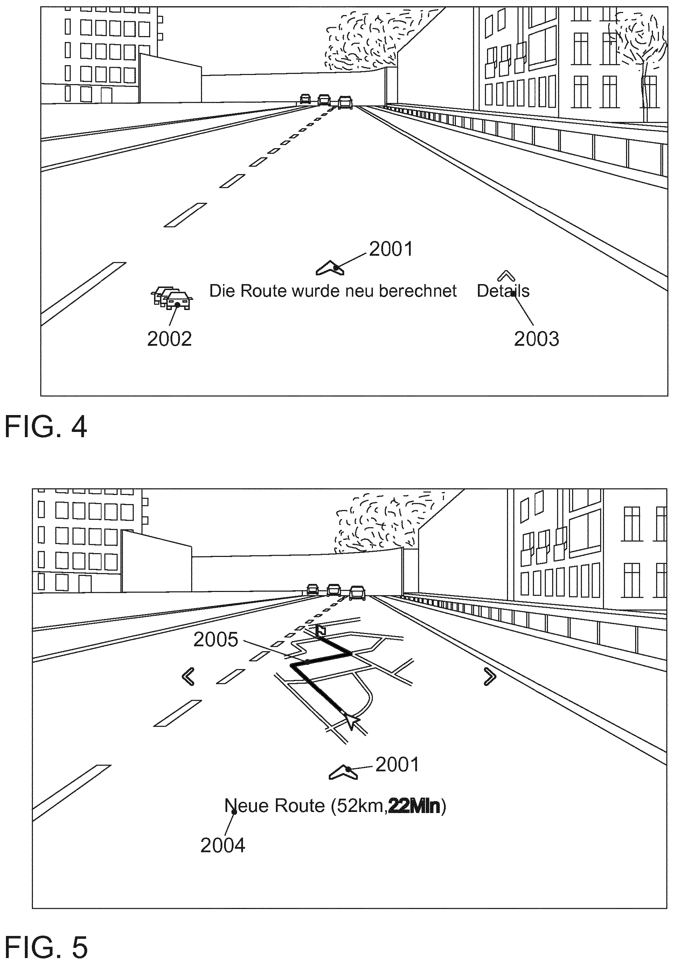

Zunächst wird der Ablauf einer Visualisierung für Routenänderungen in größerer Entfernung (außerhalb des Sichtfeldes) betrachtet. In Fig. 4 ist dargestellt, dass das Fahrzeug 10 vom Navigationssystem 130 entlang der ausgewählten Route geführt wird. Es ist ein Beispiel einer minimalistischen Routenführung gezeigt, bei dem nur der Navigationspfeil 2001 eingeblendet wird, zum Zeichen, dass das Fahrzeug auf der eingestellten Route unterwegs ist. Von Zeit zu Zeit berechnet das Navigationssystem 130 die Route neu. Wenn dann eine andere Route unter einem oder mehreren Kriterien sich als vorteilhaft gegenüber der bisherigen Route erweist, wird ein Hinweis 2002 für den Fahrer eingeblendet, dass die Route neu berechnet wurde.

Mögliche Kriterien, unter denen die Routen beurteilt werden, sind:
- Entfernung
- Fahrzeit
- Energieverbrauch
- Straßenqualität
- Verkehrsdichte.

Die Auflistung ist nicht abschließend und es können weitere Kriterien, einzeln oder in Kombination mit einem oder mehreren der anderen Kriterien, berücksichtigt werden.

Ist die Abzweigstelle der neuen Route weit genug entfernt und nicht in Sichtweite, so erscheint zunächst nur der Hinweis 2002, dass die Route neu berechnet wurde. Für die Beurteilung, ob die Distanz bis zur Abzweigstelle groß genug ist, kann eine bestimmte Mindestdistanz, z.B. 5 km Entfernung, programmiert sein. Zusammen mit dem Hinweis auf die neu berechnete Route 2002 kann noch ein Bedienhinweis 2003 eingeblendet werden, wie weitere Details über die neu berechnete Route angezeigt werden können.

Der Nutzer hat damit die Möglichkeit, eine Routenübersicht über die neu berechnete Route einblenden zu lassen. Dazu wird der Fahrer mit der Multifunktions-Lenkrad-Bedienung (MFL) die Option für die Detailansicht 2003 anwählen. Sodann wird die neue Route durch das HUD 20 eingeblendet. Beispielsweise kann die Detailansicht durch Drücken der MFL Pfeil nach Oben Taste der MFL angewählt werden.

Die Routenübersicht für die neue Route ist in Fig. 5 gezeigt und hat die Bezugszahl 2005. Dort ist der Verlauf der neu berechneten Route grob zu sehen. Der Ausgangspunkt ist mit dem typischen Navigationspfeil dargestellt. Auch der Zielpunkt der Route ist mit einer Fahne markiert. Die Routenübersicht zeigt die Route z.B. in der Farbe Blau an. Die umgebenden anderen Straßen sind landkartenartig mit anderer Farbe, z.B. Grau, dargestellt. Unterhalb der Route 2005 findet sich der Navigationspfeil 2001 und der Hinweis 2004 mit den Angaben, dass die neue Route mit einer Fahrstrecke von 52 km einhergeht, für die eine voraussichtliche Fahrzeit von 22 min zutrifft. Links und rechts der Route sind zwei Pfeiltasten 2006 dargestellt, die als Bedienhinweis aufzufassen sind. Durch Drücken der Pfeil nach rechts-Taste oder der Pfeil nach links-Taste kann zwischen der Routenübersicht der verschiedenen Alternativrouten hin und her geschaltet werden.

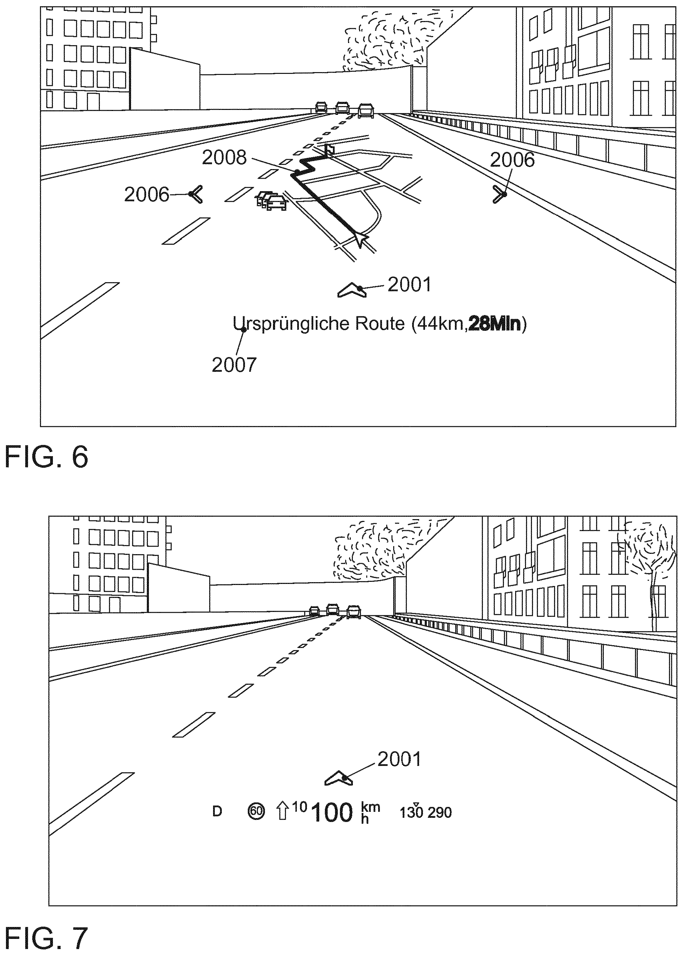

In der Fig. 6 ist die Routenübersicht 2008 für die ursprüngliche Route gezeigt. Die ursprüngliche Route wird in einer anderen Farbe dargestellt. Vorzugsweise wird die Farbe Rot dafür eingesetzt. Darunter findet sich der Navigationspfeil 2001 und der Hinweis 2007, dass es sich um die ursprüngliche Route handelt mit den Angaben 44 km Fahrstrecke und 28 min Fahrzeit. Neben der Routenübersicht sind wieder die Pfeiltasten 2006 zu sehen. In einer weiteren Auswahlvariante werden beide Routen 2005 und 2008 gleichzeitig angezeigt. So wird es für den Fahrer erleichtert, den Unterschied zwischen beiden Routen zu bewerten.

Die übrige Bedienung über das MFL kann mit folgenden Tasten geschehen. Mit der OK-Taste (Bestätigungstaste) wird die angezeigte Route für das Navigationssystem 130 übernommen. Mit einer MFL-Taste (Zurück oder Pfeil unten) verlässt man die Übersicht wieder.

Für die Anzeige der Routenübersichten ist die Einhaltung der folgenden Regeln vorteilhaft:
Die mit dem größeren Zeitbedarf versehene Route sollte mit einer orangenen oder roten Farbe gekennzeichnet sein, um anzudeuten, dass es eine attraktivere Route gibt. Die attraktivere Route sollte in der Farbe der aktiven Route angezeigt werden (z.B. Blau).

Bei beiden Routen sollte der jeweilige Zeitbedarf angezeigt werden. Alternativ kann auch der zusätzliche Zeitbedarf nur bei der Route mit der längeren Fahrzeit angegeben werden.

Bei der neu berechneten Route sollte die Art der Straße durch eine Farbkodierung angegeben werden. Für den Fahrer ist es z.B. gerade bei längeren Strecken interessant zu wissen, ob er die neue Route weiterhin auf einer Autobahn fortsetzen kann oder auf eine Landstraße umgeleitet wird oder ob z.B. mautpflichtige Strecken gewählt wurden.

Die vorgeschlagene Routenübersicht sollte anhand der Lenkradbedienung zoombar sein, um dadurch auch kurze Routenänderungen ansehen zu können.

Die Anzeige der Routenübersicht (aufgrund ihrer Größe und Flächigkeit) sollte nur in nicht anspruchsvollen Fahrsituationen erfolgen. Alternativ ist eine Beschränkung der Anzeige der Routenübersicht auf Situationen denkbar, in denen das Fahrzeug steht. Zusätzlich ist eine Anzeige der Routenübersicht auf der Anzeigeeinheit 30 in der Mittelkonsole denkbar.

Im Folgenden wird ein Ausführungsbeispiel beschrieben, das eine Visualisierung von direkt vor dem Fahrzeug befindlichen Routenveränderungen ermöglicht.

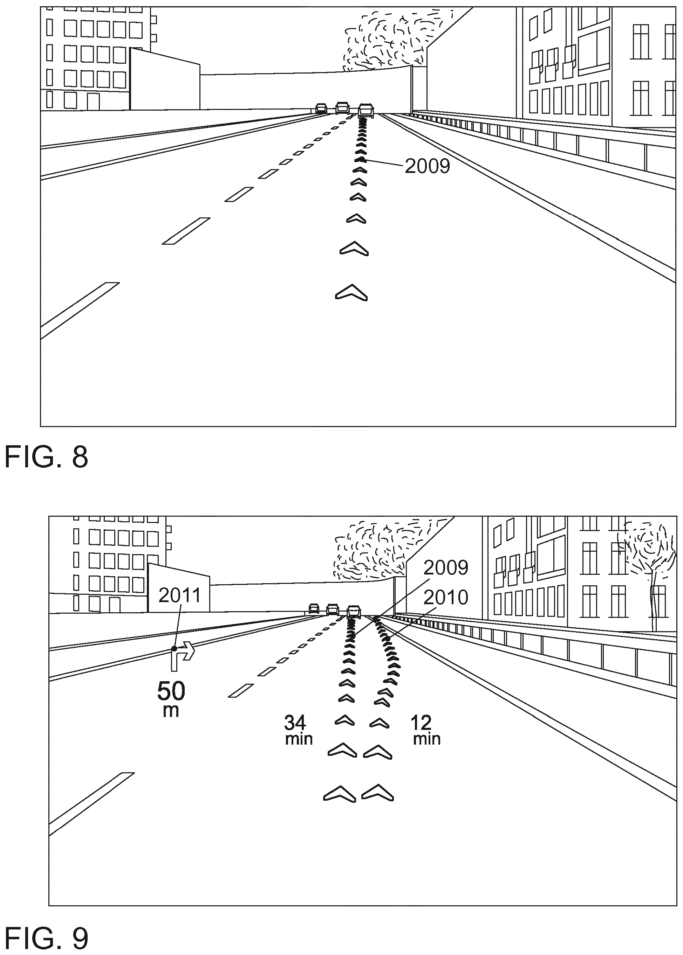

Die Ausgangssituation ist in Fig. 7 dargestellt. Es handelt sich ebenfalls um eine reduzierte Navigationsansicht ähnlich wie in Fig. 4 gezeigt. Der Nutzer erkennt an dem Navigationspfeil 2001, dass eine Navigation aktiv ist, aber kein unmittelbares Fahrmanöver bevorsteht. Wird ein Fahrmanöver notwendig, so wird der Nutzer mit genügend Vorlauf darauf hingewiesen. In dem Fall breitet sich ein augmentierter Navigationspfad 2009 aus der reduzierten Navigationsanzeige aus. Das ist in Fig. 8 zu sehen. Die Darstellung der reduzierten Ansicht und des Navigationspfades nutzt dasselbe grafische Element (den Navigationspfeil 2001 oder auch einen Punkt), welches "straßenfest" in einem gewissen Abstand auf die Straße augmentiert wird. Das Fahrzeug 10 fährt dann über die dargestellten Navigationspfeile.

Bei einer neuen Routenempfehlung wird neben der ursprünglich berechneten Route eine neue Route angezeigt. Die Routen sind farblich codiert: Die ursprüngliche Route mit einer längeren Fahrzeit zum Ziel färbt sich rot (oder orange), während die neue Empfehlung in der gewohnten Navigationsfarbe (z.B. Blau) dargestellt wird. Zusätzlich wird bei beiden Routenempfehlungen die Verzögerungsdauer angezeigt. Das ist in der Fig. 9 dargestellt. Die ursprüngliche Route in Farbe Rot ist mit der Bezugszahl 2009 bezeichnet. Die neue Route ist mit der Bezugszahl 2010 bezeichnet, sie wird in der Farbe Blau dargestellt. Zusätzlich findet sich in Fig. 9 noch ein Abbiegehinweis 2011. Dieser deutet an, dass ein Fahrmanöver in einer Entfernung von 50 m ansteht. Der Fahrer muss sich entscheiden, welcher Route er folgen will. Neben der Möglichkeit, dass beide Routen nebeneinander dargestellt werden, kann in einer alternativen Ausführungsform die neu berechnete Routenempfehlung (Blau) so eingeblendet werden, dass durch sie die ursprüngliche Route 2009 (Rot) nach links zur Seite gedrängt wird.

Die Annahme der neuen Routenempfehlung kann automatisch erfolgen, dadurch dass der Nutzer der neuen Routenempfehlung folgt. Dies kann, wie schon beschrieben, durch PositionsTracking festgestellt werden, wenn das Fahrzeug die Abzweigstelle erreicht. Die neue Route wird dann automatisch übernommen und die ursprüngliche Route wird ausgeblendet.

In einer alternativen Ausführungsform kann die Erkennung der Routenwahl intelligent über den Blinker als Nutzerintention erkannt und übernommen werden.

In einer weiteren alternativen Ausführungsform wählt der Nutzer eine der beiden Routen aktiv aus. Das kann über ein Bedienmenü erfolgen z.B. über das MFL [nach links oder rechts klicken und den Bestätigungs-/OK-Knopf drücken] oder per Sprachbefehl.

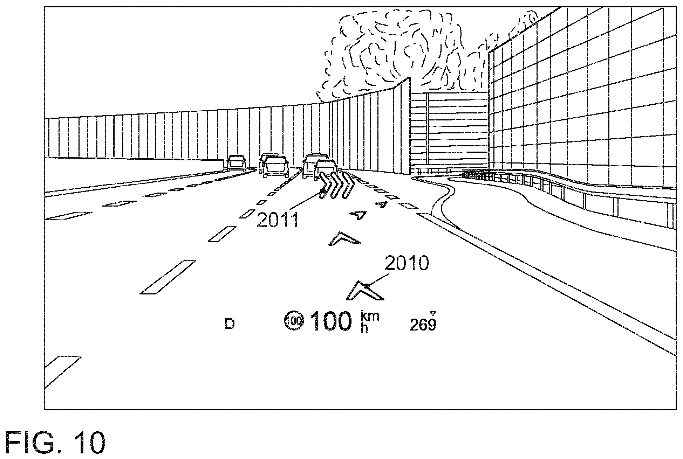

Fig. 10 zeigt einen Moment, wo der Fahrer die neue Route bereits ausgewählt hat, z.B. durch Betätigen des Blinkers nach rechts. Die ursprüngliche Route wurde bereits ausgeblendet. Der Navigationspfad, dem gefolgt werden soll, wird durch Navigationspfeile 2010 angedeutet. An der Abzweigstelle wird ein Abbiegehinweis 2011 straßenfest auf die Fahrbahn augmentiert.

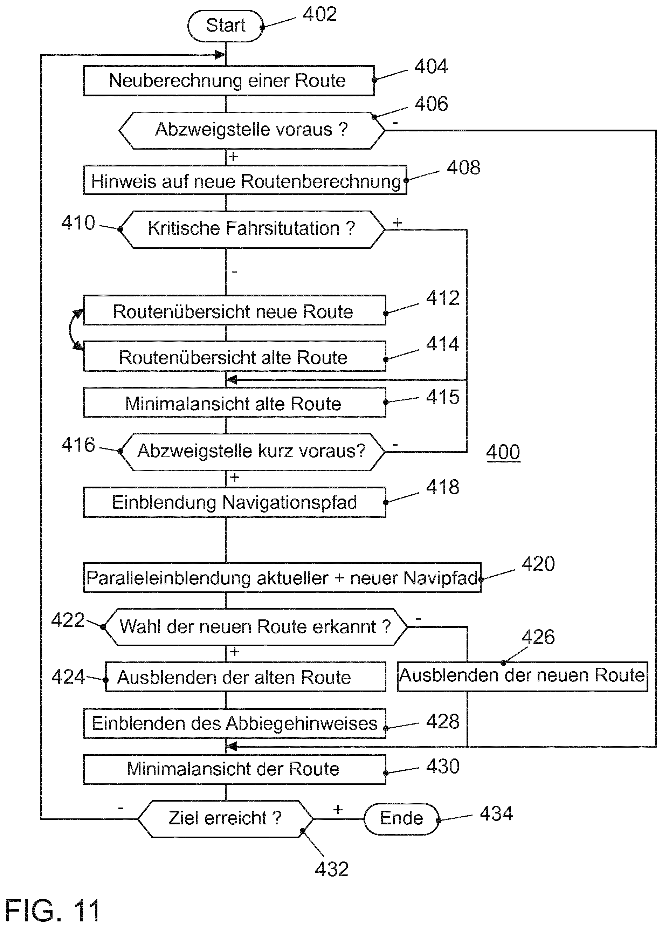

Anhand von Fig. 11 wird noch ein Computerprogramm 400 für die Berechnung der AR-Einblendungen für die verschiedenen Routen erläutert. Das Programm 400 wird in der Recheneinheit 40 abgearbeitet. Der Programmstart ist mit der Bezugszahl 402 bezeichnet. Im Programmschritt 404 erfolgt die turnusmäßige Neuberechnung der Route. Die Neuberechnung erfolgt zyklisch, um auch sich ändernde Verkehrsbedingungen wie Staus, Unfälle, Pannen, Baustellen zu berücksichtigen.

Anschließend erfolgt im Programmschritt 406 eine Abfrage, ob eine Abzweigstelle nach einer der gefundenen Routen in einer bestimmten Entfernung, z.B. mindestens 5 km, vorausliegt. Falls nicht, verzweigt das Programm zum Schritt 430. Im anderen Fall wird in Schritt 408 eine AR-Einblendung für den Hinweis 2002 auf die Neuberechnung der Route, wie in Fig. 4 dargestellt, berechnet.

Wenn der Fahrer die Detailansicht der neu berechneten Route anfordert, wird im Programmschritt 410 eine Bewertung der Fahrsituation vorgenommen. Hier kann über eine Car-2-Car-Kommunikation ein besonderes Fahrmanöver angekündigt sein, z.B. ein kooperatives Bremsmanöver, durch das ein Auffahrunfall verhindert werden soll. Dies wäre z.B. bei dem intelligenten Kolonnenfahren von mehreren Fahrzeugen, dem sogenannten Platooning, wichtig. Eine andere Möglichkeit wäre, dass von einem Fahrerassistenzsystem eine besondere Fahrsituation erkannt wurde. Sei es, dass der Abstand zum vorausfahrenden Fahrzeug zu gering ist oder die Geschwindigkeit zu hoch ist. Weitere Beispiele sind denkbar.

Wird eine derartige besondere Fahrsituation nicht erkannt, so erfolgt im Schritt 412 die Berechnung der AR-Einblendung der Routenübersicht 2005 für die neu berechnete Route. Die Einblendung ist in Fig. 5 gezeigt.

Mit den Richtungstasten für links und rechts kann der Fahrer zwischen den angebotenen Routen hin- und herschalten. Wenn also vom Fahrer die Routenübersicht für die ursprüngliche Route angewählt wird, erfolgt im Schritt 414 die Berechnung der AR-Einblendung für die Routenübersicht der ursprünglichen Route, wie in Fig. 6 gezeigt.

Sodann überprüft das Programm in Schritt 416, ob eine Abzweigstelle in kurzer Distanz voraus liegt, an der das Fahrzeug 10 nach einer der angebotenen Routen abbiegen sollte. Die kurze Distanz könnte im Bereich von 2 km oder weniger liegen. Andere Werte sind möglich. Ist das nicht der Fall, wird in Schritt 415 eine AR-Einblendung für eine minimalistische Routeneinblendung berechnet. Eine solche minimalistische Routeneinblendung ist in Fig. 7 gezeigt.

Danach verzweigt das Programm wieder zur Abfrage 416. Wenn darin erkannt wird, dass der Wegpunkt, an dem das Fahrzeug abbiegen muss, in kurzer Entfernung voraus ist, erfolgt in Schritt 418 die Berechnung der AR-Einblendung für die Anzeige des aktuellen Navigationspfades. Diese Einblendung wird in Fig. 8 gezeigt. Sie dient zur Anzeige, dass ein Fahrmanöver bevorsteht. Der Fahrer wird dadurch aufmerksam gemacht.

Wenn das Fahrzeug weiter vorgerückt ist, wechselt die Anzeige. Dazu findet in Schritt 420 die Berechnung der AR-Einblendung für die parallele Anzeige der ursprünglichen Route 2009 und der neu berechneten Route 2010 statt. Diese AR-Einblendung ist in Fig. 9 gezeigt. Auch der Abbiegepfeil 2011 und die Angaben bzgl. der Fahrzeiten der beiden Routen gehören zu der berechneten AR-Einblendung.

In der nachfolgenden Abfrage 422 wird ermittelt, welche Route der Fahrer wählt. Dies kann am Setzen des Blinkers für den Abbiegevorgang erkannt werden. Die andere schon erwähnte Möglichkeit betrifft das schon erwähnte Positionstracking. Hier würde die Routenwahl allerdings etwas später erkannt, weil beide Routen bis zur Abbiegestelle noch identisch verlaufen.

Wenn in Abfrage 422 das Setzen des Blinkers erkannt wurde, verzweigt das Programm zum Schritt 424, in dem eine neue AR-Einblendung berechnet wird. Die ursprüngliche Route 2009 wird dadurch ausgeblendet.

Es folgt der Schritt 428, bei dem eine weitere AR-Einblendung berechnet wird. Darin wird die neue Route 2010 so dargestellt wie in Fig. 10 gezeigt. Der Abbiegepfeil 2011 wird so auf die Straße augmentiert, dass er straßenfest an der Abbiegestelle erscheint.

Wird in Schritt 422 weder das Setzen des Blinkers noch die Wahl der neuen Route 2010 erkannt, erfolgt in Schritt 426 die Berechnung einer weiteren AR-Einblendung. Darin wird die neu berechnete Route 2010 ausgeblendet und die ursprüngliche Route 2009 wird beibehalten.

Anschließend erfolgt in Schritt 430 der Wechsel zur minimalistischen Routenführung. In Schritt 430 wird die entsprechende AR-Einblendung berechnet. Dieser Schritt wird auch dann ausgeführt, wenn die neue Route 2010 gewählt wurde. Die minimalistische Ansicht wird ähnlich sein wie in Fig. 7 dargestellt.

Schließlich erfolgt in Schritt 432 die Abfrage, ob das Ziel der Navigationsroute erreicht wurde. Solange das nicht der Fall ist, verzweigt das Programm zum Anfang des Programms und es findet wieder die Neuberechnung der Route in Schritt 404 statt.

Über die Schritte 404 bis 432 wird im Programm also eine Schleife gebildet, die so oft durchlaufen wird, bis in Abfrage 432 erkannt wird, dass der geplante Zielpunkt der Navigation erreicht wurde. Wenn das der Fall ist, wird das Programm im Programmschritt 434 beendet. Wenn der Fahrer eingreift und die Komfortfunktion verlässt, kann das Programm zu jeder Zeit beendet werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung wird in den Ausführungsbeispielen am Beispiel des Einsatzes in Fahrzeugen genauer erläutert. Hier wird auch auf die Einsatzmöglichkeit bei Flugzeugen und Helikoptern zum Beispiel bei Landemanövern oder Sucheinsätzen etc. hingewiesen.

Es wird aber darauf hingewiesen, dass der Einsatz nicht darauf beschränkt ist. Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

Auch bei ferngesteuerten Geräten wie Robotern, bei denen die Fernsteuerung über einen Monitor erfolgt, auf dem ein Kamerabild wiedergegeben wird, können AR Einblendungen die Bedienung erleichtern. Also besteht hier auch eine Einsatzmöglichkeit.

### Bezugszeichenliste

- 10: Fahrzeug
- 20: Head-Up Display HUD
- 21: virtuelle Projektionsfläche
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 160: Kommunikationsmodul
- 200: Infotainment-System
- 400: Computerprogramm
- 402-: verschiedene
- 445: Programmschritte
- 2001: Navigationspfeil
- 2002: Hinweis auf neue Routenberechnung
- 2003: Bedienhinweis auf Detailansicht
- 2004: Hinweis neue Route
- 2005: Routenübersicht neue Route
- 2006: Bedienhinweis Wechsel zu Ansicht anderer Route
- 2007: Hinweis ursprüngliche Route
- 2008: Routenübersicht ursprüngliche Route
- 2009: Navigationspfad für ursprüngliche Route
- 2010: Navigationspfad für neue Route
- 2011: Abbiegehinweis

## Patentansprüche

1. Verfahren zur Berechnung einer AR-Einblendung einer von einem Navigationssystem (130) berechneten Route (2009, 2010), welche einem Fahrer eines Fahrzeugs auf einer AR-Anzeigeeinheit (20), insbesondere einem Head-Up Display eines Fahrzeuges (10), dargestellt wird, wobei die Route (2009, 2010) von Zeit zu Zeit neu berechnet wird und **gekennzeichnet dadurch, dass**
- ein Navigationspfeil (2001) dargestellt wird, wenn sich das Fahrzeug auf einer eingestellten Route befindet, aber kein unmittelbares Fahrmanöver bevorsteht;
- in einer ersten Distanz vor einer Abzweigstelle ein Hinweis (2002) auf eine neu berechnete Route eingeblendet wird, wobei dem Fahrer eine Bedienmöglichkeit (2003) gegeben wird, eine Übersicht zu der neu berechneten Route (2005) einzublenden, und bei Ausübung dieser Bedienmöglichkeit (2003) die Übersicht zu der neu berechneten Route dargestellt wird, und wobei dem Fahrer eine weitere Bedienmöglichkeit (2006) gegeben wird, zwischen der Übersicht der neu berechneten Route (2005) und einer Übersicht einer zuvor berechneten Route (2008) hin und her zu schalten, und bei Ausübung dieser weiteren Bedienmöglichkeit (2006) entweder die Übersicht zu der neu berechneten Route oder die Übersicht zu der zuvor berechneten Route dargestellt wird, und wobei die jeweilige Route in ihrem Verlauf bis zum Zielpunkt angezeigt wird; und
- in einer gegenüber der ersten Distanz geringeren zweiten Distanz vor der Abzweigstelle ein auf die Straße augmentierter Navigationspfad für die neu berechnete Route (2010) neben einem auf die Straße augmentierten Navigationspfad der zuvor berechneten Route (2009) dargestellt wird und der Navigationspfad für diejenige Route, der das Fahrzeug (10) nicht folgt, ausgeblendet wird, sobald das Navigationssystem am Setzen des Blinkers des Fahrzeuges erkannt hat, welcher Route das Fahrzeug (10) folgt.

2. Verfahren nach Anspruch 1, wobei vor Einblendung der neu berechneten Route (2010) eine AR-Einblendung so berechnet wird, dass dem Fahrer ein Hinweis (2002) auf die neu berechnete Route (2010) gegeben wird, mit einem Bedienhinweis (2003), wie sich der Fahrer die Routenübersicht (2005) zur neu berechneten Route (2010) einblenden lassen kann.

3. Verfahren nach einem der vorhergehenden Ansprüche, wobei die AR-Einblendung für die Routenübersicht (2005, 2008) zoombar berechnet wird, wobei ein Zoomvorgang mit einer Lenkradbedienung (50) ausführbar ist.

4. Verfahren nach einem der vorhergehenden Ansprüche, wobei vor Einblendung der Routenübersicht (2005, 2008) eine Bewertung der Fahrsituation (410) durchgeführt wird und die Einblendung nur dann durchgeführt wird, wenn die Bewertung der Fahrsituation (410) ergibt, dass die Fahrsituation keine erhöhte Aufmerksamkeit von dem Fahrer erfordert.

5. Verfahren nach einem der vorhergehenden Ansprüche, wobei die AR-Einblendung für die Darstellung der neu berechneten Route (2010) so berechnet wird, dass sie sich farblich von der AR-Einblendung für die Darstellung der zuvor berechneten Route (2008) unterscheidet.

6. Verfahren nach Anspruch 5, wobei die Route mit dem größeren Zeitbedarf mit einer roten oder orangene Farbe dargestellt wird, hingegen die zeitlich attraktivere Route mit einer blauen oder grünen Farbe dargestellt wird.

7. Vorrichtung zur Durchführung des Verfahrens nach einem der vorhergehenden Ansprüche 1 bis 6, mit einer AR-Anzeigeeinheit (20), einem Navigationssystem (130), von dem eine Route (2009, 2010) berechnet wird, und einer Recheneinheit (40) zur Berechnung einer AR-Einblendung einer von dem Navigationssystem (130) berechneten Route (2009, 2010) auf der AR-Anzeigeeinheit (20), wobei
- das Navigationssystem (130) so ausgelegt ist, dass es die Route (2009, 2010) von Zeit zu Zeit neu berechnet,
**dadurch gekennzeichnet, dass**
- die Recheneinheit (40) die AR-Einblendung so berechnet, dass
- ein Navigationspfeil (2001) dargestellt wird, wenn sich das Fahrzeug auf einer eingestellten Route befindet, aber kein unmittelbares Fahrmanöver bevorsteht;
- in einer ersten Distanz vor einer Abzweigstelle ein Hinweis auf eine neu berechnete Route (2010) eingeblendet wird, wobei der Hinweis auf die neu berechnete Route eine Bedienmöglichkeit (2003) beinhaltet, eine Übersicht zu der neu berechneten Route einzublenden, und bei Ausübung dieser Bedienmöglichkeit (2003) die Übersicht zu der neu berechneten Route dargestellt wird, und wobei eine weitere Bedienmöglichkeit (2006) ermöglicht, zwischen der Anzeige der Routenübersicht (2005, 2008) für die neu berechnete Route (2010) und der zuvor berechneten Route (2009) hin und her zu schalten, und bei Ausübung dieser weiteren Bedienmöglichkeit (2006) entweder die Übersicht zu der neu berechneten Route oder die Übersicht zu der zuvor berechneten Route dargestellt wird, und wobei die jeweilige Route in ihrem Verlauf bis zum Zielpunkt angezeigt wird; und
- in einer gegenüber der ersten Distanz geringeren zweiten Distanz vor der Abzweigstelle ein auf die Straße augmentierter Navigationspfad für die neu berechnete Route (2010) neben einem auf die Straße augmentierten Navigationspfad der zuvor berechneten Route (2009) dargestellt wird und der Navigationspfad für diejenige Route, der das Fahrzeug (10) nicht folgt, ausgeblendet wird, sobald das Navigationssystem am Setzen des Blinkers des Fahrzeuges erkannt hat, welcher Route das Fahrzeug (10) folgt.

8. Vorrichtung nach Anspruch 7, wobei die Recheneinheit (40) weiterhin so ausgelegt ist, die Berechnungen von AR-Einblendungen nach einem der Ansprüche 2 bis 6 durchzuführen.

9. Vorrichtung nach Anspruch 7 oder 8, wobei die Anzeigeeinheit (20) ein Head-Up Display ist.

10. Kraftfahrzeug, **dadurch gekennzeichnet, dass** das Kraftfahrzeug (10) eine Vorrichtung nach einem der Ansprüche 7 bis 9 aufweist.

11. Computerprogramm, **dadurch gekennzeichnet, dass** das Computerprogramm ausgelegt ist, bei Abarbeitung in einer Recheneinheit (40) die Schritte des Verfahrens zur Berechnung einer AR-Einblendung für die Darstellung einer Navigationsroute (2009, 2010) auf einer AR-Anzeigeeinheit (20) nach einem der Ansprüche 1 bis 6 durchzuführen.

## Claims

1. Method for calculating an AR overlay for a route (2009, 2010) calculated by a navigation system (130), which overlay is displayed to a driver of a vehicle on an AR display unit (20), in particular a head-up display of a vehicle (10), wherein the route (2009, 2010) is calculated anew from time to time and **characterized in that**
- a navigation arrow (2001) is displayed when the vehicle is on a set route but no immediate driving maneuver is coming up;
- at a first distance before a branch-off point, a notification (2002) about a newly calculated route is overlaid, wherein the driver is given an operating option (2003) to overlay an overview of the newly calculated route (2005), and if this operating option (2003) is selected, the overview of the newly calculated route is displayed, and wherein the driver is given a further operating option (2006) to switch back and forth between the overview of the newly calculated route (2005) and an overview of a previously calculated route (2008), and if this further operating option (2006) is selected, either the overview of the newly calculated route or the overview of the previously calculated route is displayed, and wherein the particular route is shown in its course to the destination; and
- at a second distance before the branch-off point shorter than the first distance, a navigation path, which is augmented onto the road, for the newly calculated route (2010) is displayed next to a navigation path, which is augmented onto the road, of the previously calculated route (2009) and the navigation path for the route that the vehicle (10) does not follow is hidden as soon as the navigation system has recognized which route the vehicle (10) is following by the vehicle's turn signal being activated.

2. Method according to claim 1, wherein before the newly calculated route (2010) is overlaid, an AR overlay is calculated such that the driver is given a notification (2002) about the newly calculated route (2010), with an operating notification (2003) about how the driver can have the route overview (2005) of the newly calculated route (2010) overlaid.

3. Method according to either of the preceding claims, wherein the AR overlay for the route overview (2005, 2008) is calculated so to be zoomable, wherein a zoom operation can be carried out using a steering wheel control (50).

4. Method according to any of the preceding claims, wherein before the route overview (2005, 2008) is overlaid, an assessment of the driving situation (410) is performed and the overlaying is only performed if the assessment of the driving situation (410) shows that the driving situation does not require increased attention from the driver.

5. Method according to any of the preceding claims, wherein the AR overlay for displaying the newly calculated route (2010) is calculated such that it differs in color from the AR overlay for displaying the previously calculated route (2008).

6. Method according to claim 5, wherein the route requiring more time is displayed in a red or orange color, whereas the more time-favorable route is displayed in a blue or green color.

7. Device for performing the method according to any of the preceding claims 1 to 6, comprising an AR display unit (20), a navigation system (130) which calculates a route (2009, 2010), and a computing unit (40) for calculating an AR overlay for a route (2009, 2010) calculated by the navigation system (130) on the AR display unit (20), wherein
- the navigation system (130) is designed to calculate the route (2009, 2010) anew from time to time,
**characterized in that**
- the computing unit (40) calculates the AR overlay such that
- a navigation arrow (2001) is displayed when the vehicle is on a set route but no immediate driving maneuver is coming up;
- at a first distance before a branch-off point, a notification about a newly calculated route (2010) is overlaid, wherein the notification about the newly calculated route contains an operating option (2003) to overlay an overview of the newly calculated route, and if this operating option (2003) is selected, the overview of the newly calculated route is displayed, and wherein a further operating option (2006) allows switching back and forth between the display of the route overview (2005, 2008) for the newly calculated route (2010) and of the previously calculated route (2009), and if this further operating option (2006) is selected, either the overview of the newly calculated route or the overview of the previously calculated route is displayed, and wherein the particular route is shown in its course to the destination; and
- at a second distance before the branch-off point shorter than the first distance, a navigation path, which is augmented onto the road, for the newly calculated route (2010) is displayed next to a navigation path, which is augmented onto the road, of the previously calculated route (2009) and the navigation path for the route that the vehicle (10) does not follow is hidden as soon as the navigation system has recognized which route the vehicle (10) is following by the vehicle's turn signal being activated.

8. Device according to claim 7, wherein the computing unit (40) is further designed to perform the calculations of AR overlays according to any of claims 2 to 6.

9. Device according to claim 7 or 8, wherein the display unit (20) is a head-up display.

10. Motor vehicle, **characterized in that** the motor vehicle (10) has a device according to any of claims 7 to 9.

11. Computer program, **characterized in that** the computer program is designed to perform, when executed in a computing unit (40), the steps of the method for calculating an AR overlay for displaying a navigation route (2009, 2010) on an AR display unit (20) according to any of claims 1 to 6.

## Revendications

1. Procédé de calcul d'une incrustation AR d'un itinéraire (2009, 2010) calculé par un système de navigation (130), qui est représenté à un conducteur d'un véhicule sur une unité d'affichage AR (20), en particulier un affichage tête haute d'un véhicule (10), dans lequel l'itinéraire (2009, 2010) est recalculé de temps en temps et **caractérisé en ce que**
- une flèche de navigation (2001) est représentée lorsque le véhicule se trouve sur un itinéraire réglé, mais qu'aucune manœuvre de conduite n'est imminente ;
- à une première distance avant un point de bifurcation, une indication (2002) d'un itinéraire recalculé est incrustée, dans lequel une possibilité de commande (2003) est donnée au conducteur pour incruster un aperçu de l'itinéraire (2005) recalculé et, lors de l'exercice de cette possibilité de commande (2003), l'aperçu de l'itinéraire recalculé est représenté, et dans lequel une autre possibilité de commande (2006) est donnée au conducteur, de commuter entre l'aperçu de l'itinéraire (2005) recalculé et un aperçu d'un itinéraire (2008) calculé précédemment, et lors de l'exercice de cette autre possibilité de commande (2006), soit l'aperçu de l'itinéraire recalculé soit l'aperçu de l'itinéraire calculé précédemment est représenté, et dans lequel l'itinéraire respectif est affiché dans son déroulement jusqu'au point de destination ; et
- à une seconde distance, inférieure à la première distance, avant le point de bifurcation, un chemin de navigation augmenté sur la route pour l'itinéraire (2010) recalculé est représenté à côté d'un chemin de navigation augmenté sur la route de l'itinéraire (2009) calculé précédemment et le chemin de navigation pour l'itinéraire que le véhicule (10) ne suit pas est masqué dès que le système de navigation a reconnu, au moment de l'activation du clignotant du véhicule, quel itinéraire le véhicule (10) suit.

2. Procédé selon la revendication 1, dans lequel, avant l'incrustation de l'itinéraire (2010) recalculé, une incrustation AR est calculée de telle sorte qu'une indication (2002) concernant l'itinéraire (2010) recalculé est donnée au conducteur, avec une indication de commande (2003) indiquant comment le conducteur peut faire incruster l'aperçu d'itinéraire (2005) concernant l'itinéraire (2010) recalculé.

3. Procédé selon l'une des revendications précédentes, dans lequel l'incrustation AR pour l'aperçu d'itinéraire (2005, 2008) est calculée de manière à pouvoir être zoomée, dans lequel une opération de zoom peut être exécutée avec une commande au volant (50).

4. Procédé selon l'une des revendications précédentes, dans lequel une évaluation de la situation de conduite (410) est réalisée avant l'incrustation de l'aperçu d'itinéraire (2005, 2008) et l'incrustation n'est réalisée que si l'évaluation de la situation de conduite (410) révèle que la situation de conduite ne nécessite pas une attention accrue de la part du conducteur.

5. Procédé selon l'une des revendications précédentes, dans lequel l'incrustation AR pour la représentation de l'itinéraire (2010) recalculé est calculée de manière à se distinguer par sa couleur de l'incrustation AR pour la représentation de l'itinéraire (2008) calculé précédemment.

6. Procédé selon la revendication 5, dans lequel l'itinéraire nécessitant le plus de temps est représenté par une couleur rouge ou orange, tandis que l'itinéraire plus intéressant en termes de temps est représenté par une couleur bleue ou verte.

7. Dispositif permettant la mise en œuvre du procédé selon l'une des revendications précédentes 1 à 6, comportant une unité d'affichage AR (20), un système de navigation (130) à partir duquel un itinéraire (2009, 2010) est calculé, et une unité de calcul (40) pour calculer une incrustation AR d'un itinéraire (2009, 2010) calculé par le système de navigation (130) sur l'unité d'affichage AR (20), dans lequel
- le système de navigation (130) est conçu pour recalculer l'itinéraire (2009, 2010) de temps en temps,
**caractérisé en ce que**
- l'unité de calcul (40) calcule l'incrustation AR de telle sorte que
- une flèche de navigation (2001) est représentée lorsque le véhicule se trouve sur un itinéraire réglé, mais qu'aucune manœuvre de conduite n'est imminente ;
- à une première distance avant un point de bifurcation, une indication d'un itinéraire (2010) recalculé est incrustée, dans lequel l'indication de l'itinéraire recalculé contient une possibilité de commande (2003) pour incruster un aperçu de l'itinéraire recalculé, et lors de l'exercice de cette possibilité de commande (2003), l'aperçu de l'itinéraire recalculé est représenté, et dans lequel une autre possibilité de commande (2006) permet de commuter en va-et-vient entre l'affichage de l'aperçu d'itinéraire (2005, 2008) pour l'itinéraire (2010) recalculé et l'itinéraire (2009) calculé précédemment, et lors de l'exercice de cette autre possibilité de commande (2006), soit l'aperçu de l'itinéraire recalculé soit l'aperçu de l'itinéraire calculé précédemment est représenté, et dans lequel l'itinéraire respectif est affiché dans son déroulement jusqu'au point de destination ; et
- à une seconde distance, inférieure à la première distance, avant le point de bifurcation, un chemin de navigation augmenté sur la route pour l'itinéraire (2010) recalculé est représenté à côté d'un chemin de navigation augmenté sur la route de l'itinéraire (2009) calculé précédemment et le chemin de navigation pour l'itinéraire que le véhicule (10) ne suit pas est masqué dès que le système de navigation a reconnu, au moment de l'activation du clignotant du véhicule, quel itinéraire le véhicule (10) suit.

8. Dispositif selon la revendication 7, dans lequel l'unité de calcul (40) est en outre conçue pour réaliser les calculs d'incrustations AR selon l'une des revendications 2 à 6.

9. Dispositif selon la revendication 7 ou 8, dans lequel l'unité d'affichage (20) est un affichage tête haute.

10. Véhicule automobile, **caractérisé en ce que** le véhicule automobile (10) présente un dispositif selon l'une des revendications 7 à 9.

11. Programme informatique, **caractérisé en ce que** le programme informatique est conçu pour réaliser, lorsqu'il est traité dans une unité de calcul (40), les étapes du procédé de calcul d'une incrustation AR pour la représentation d'un itinéraire (2009, 2010) de navigation sur une unité d'affichage AR (20) selon l'une des revendications 1 à 6.
